# EUROPEAN PATENT SPECIFICATION

(11) **EP 2 526 219 B1**
(45) Date of publication and mention of the grant of the patent: **29.03.2017**
(21) Application number: 11702499.2
(22) Date of filing: 20.01.2011
(51) Int. Cl.: C23C 18/12, C09D 5/08, C09D 1/00

(54) **ANTICORROSION SOL-GEL COATING FOR METAL SUBSTRATE**
ANTIKORROSIVER SOL-GEL-ÜBERZUG FÜR METALLSUBSTRATE
REVÊTEMENT ANTI-CORROSION POUR DES SUBSTRATS EN MÉTAL

(30) Priority: 22.01.2010 GB 201001015
(43) Date of publication of application: 28.11.2012
(73) Proprietor: Sheffield Hallam University, South Yorkshire S1 1WB (GB)
(72) Inventor: WANG, Heming, Sheffield South Yorkshire S1 1WB (GB); AKID, Robert, Sheffield, South Yorkshire S1 1WB (GB)
(74) Representative: Neilson, Martin Mark
(86) International application number: PCT/GB2011/050092
(87) International publication number: WO 2011/089431

(56) References cited:
- WO-A1-00/69976
- US-A1- 2004 255 819
- US-B1- 6 277 304
- WU K H ET AL: "Synthesis, infrared stealth and corrosion resistance of organically modified silicate-polyaniline/carbon black hybrid coatings", EUROPEAN POLYMER JOURNAL, vol. 45, no. 10, 18 July 2009 (2009-07-18) , pages 2821-2829, XP026612026, PERGAMON PRESS LTD. OXFORD [GB] ISSN: 0014-3057, DOI: 10.1016/J.EURPOLYMJ.2009.07.008 [retrieved on 2009-07-18]
- KINLEN P J ET AL: "Corrosion protection using polyaniline coating formulations", SYNTHETIC METALS, vol. 85, no. 1-3, 15 February 1997 (1997-02-15), pages 1327-1332, XP002626878, ELSEVIER [CH] ISSN: 0379-6779, DOI: 10.1016/S0379-6779(97)80257-3
- ITA M ET AL: "Polyaniline/silica hybrid composite gels prepared by the sol-gel process", JOURNAL OF SOL-GEL SCIENCE AND TECHNOLOGY, vol. 26, no. 1-3, January 2003 (2003-01), pages 479-482, XP002626879, KLUWER ACADEMIC PUBLISHERS [NL] ISSN: 0928-0707, DOI: 10.1023/A:1020782829649
- RADHAKRISHNAN S ET AL: "Conducting polyaniline-nano-TiO2 composites for smart corrosion resistant coatings", ELECTROCHIMICA ACTA, vol. 54, no. 4, 9 September 2008 (2008-09-09), pages 1249-1254, XP025817405, ELSEVIER SCIENCE PUBLISHERS, BARKING [GB] ISSN: 0013-4686, DOI: 10.1016/J.ELECTACTA.2008.08.069 [retrieved on 2008-09-09]
- WU ET AL: "Characterization and corrosion resistance of organically modified silicate-NiZn ferrite/polyaniline hybrid coatings on aluminum alloys", CORROSION SCIENCE, vol. 49, no. 7, 21 May 2007 (2007-05-21), pages 3001-3014, XP022086923, Elsevier B.V. [NL] ISSN: 0010-938X, DOI: 10.1016/J.CORSCI.2007.02.008

## Description

The present invention relates to method and apparatus for protecting a metal substrate from corrosion via a sol-gel derived coating including polyaniline.

Magnesium and aluminium are exceptionally lightweight metals, with densities of 1.74 g/cm³ and 2.7 g/cm³, being 4.5 and 2.9 times less dense than steel respectively. Accordingly, these metals and their alloys are promising materials for a wide range of applications where weight reduction is important, such as the automotive and aerospace sectors, in order to lower fuel consumption and reduced CO₂ emissions for example. Alloys of both materials have good mechanical properties, especially aluminium alloys containing copper and magnesium and magnesium alloys containing manganese, aluminium, zinc, zirconium and rare earths. However, the application of these metals and their alloys has been somewhat limited for many engineering applications due largely to their poor corrosion resistance, especially in chloride-containing aqueous electrolytes.

Historically passive metals such as magnesium, aluminium and zinc have relied upon the use of passivation treatments or primer coatings containing chromium compounds to impart corrosion resistance. Unfortunately, these treatments are toxic and carcinogenic and are to be banned in a large number of countries. Alternative chromium-free surface treatments or coatings such as, laser cladding, thermal spraying, physical vapour deposition, anodizing, conversion coating, and organic coatings have been explored in order to improve the corrosion resistance with limited universal success.

Sol-gel technology is fast becoming a recognised approach for producing an alternative environmentally-acceptable anticorrosion or functional coating, where the major advantage of hybrid sol-gel systems over conventional ceramic-based sol-gel coatings is that crack-free, thick coatings (above 10 µm), with controlled composition and morphology, can be formed at low cure temperatures, in particular down to room temperature (H.M.Wang, R. Akid, Corr. Sci., 49 (2007) 449). In addition, sol-gel technology also provides the advantages of low cost, simple formulation chemistry and flexibility of application method for coating complex geometries, e.g., dip, spray, etc. To this end several attempts to apply sol-gel films on Aluminium and Magnesium-based alloys have been recently reported, particularly for the highly reactive structural alloys 'A2024' 'AZ31, in particular but not exclusively; Hamdy, Mat. Lettrs 60(21-22) (2006), 2633, Yue, J. Rare Earths, 25 (2), (2007), 193, Rajath Varma, Surf. Coat Technology, 204(3) (2009), 277, Voevodin, Surf. Coat Technology, 140(1), (2001), 29, Rosero-Navarro, Surf. Coat Technology, 203(13), (2009), 1897; US 6,777,094; US 7,011,719; R. Supplit, T. Koch, U. Schubert, Corr. Sci. 49 (2007) 3015; F. Zucchi, V. Grassi, A. Frignani, C. Monticelli, G. Trabanelli, Surf. Coat. Technol. 200 (2006) 4136; A.N. Khramov,V.N. Balbyshev, L.S. Kasten, R.A. Mantz, Thin Solid Films 514 (2006) 17; A.L.K. Tan, A.M. Soutar, I.F. Annergren, Y.N. Liu, Surf. Coat. Technol. 198 (2005) 478; M.F. Montemor, M.G.S. Ferreira, Electrochim. Acta 52 (2007) 7486; S.V. Lamaka et al. Electrochim. Acta 53 (2008) 4773. However, sol-gel coatings themselves do not exhibit the required anticorrosion properties for the passive metals and other lightweight metals susceptible to corrosion.

There is therefore a need for an effective anticorrosion treatment for lightweight metals that are particularly susceptible to corrosion that does not comprise the integrity of the metal, have adverse side affects and provides long lasting protection of the metal within a variety of different environments.

The inventors have identified that a sol-gel derived coating incorporating polyaniline is effective to protect an underlying metal substrate from corrosion.

Polyaniline (PANI) is a conductive polymer which has unique electrical and optical properties; is relatively cheap, easy to synthesize and stable under a wide variety of experimental conditions. Following initial reports that polyaniline provides good corrosion protection to stainless steel (David W. DeBerry, J. Electrochem. Soc. 132(5) (1985) 1022), polyaniline has been investigated as an additive in corrosion protection systems for ferrous alloy substrates and for the corrosion protection of the light alloys, e.g., aluminium (S Sathiyanarayanan, S Azim, G Venkatachari, J. App. Poly. Sci. 107(4) (2008) 2224; G Williams, HN McMurray, Electrochim. Acta 54 (2009) 4245). K.H. Wu et al., Eur. Polym. J. 45(10), 18 July 2009, pp. 2821 - 2829, DOI: 10.1016/J.EURPOLYMJ.2009.07.008, XP026612026, reports the synthesis, infrared stealth and corrosion resistance of organically modified silicate-polyaniline/carbon black hybrid coatings on aluminium alloy substrate.

According to a first aspect of the present invention there is provided a metal substrate comprising: an acid catalysed organic-inorganic hybrid chemically bonded to the substrate obtainable by a sol- gel process of generating an acid catalysed organic-inorganic hybrid sol-gel, providing a polyaniline solution in which the polyaniline component is not polymerised or is not formed as a composite, combining the sol-gel with the polyaniline solution to disperse the polyaniline in the sol-gel, coating the substrate with the sol-gel polyaniline solution, and curing the coating at the substrate so as to form an organic/inorganic network coating in which the polyaniline is dispersed such that the majority and preferably all of the polyaniline is not chemically bonded to the organic/inorganic network and that the polyaniline is uncoordinated within the coating; the sol-gel coating divided into at least two compositionally different regions including an outer region relative to the substrate and an intermediate bonding region positioned between the outer region and the substrate; polyaniline dispersed within the outer region and the intermediate region of the coating; the intermediate region comprising a composition resultant from the reaction of the sol-gel coating and the substrate relative to a composition of the outer region; the sol-gel coating chemically bonded to the substrate via the intermediate region.

Preferably, the thickness of the coating on the substrate is greater than 0.1 µm. Preferably, the thickness of the coating is between 0.1 µm to 100 µm. According to specific implementations, the intermediate region may comprise a thickness in the range 5 to 100 nm. Alternatively, the intermediate region may comprise a thickness in the range 10 to 50 nm.

According to a second aspect of the present invention there is provided a substrate comprising a metal base layer; an acid catalysed organic-inorganic hybrid coating chemically bonded to the metal layer obtainable by a sol-gel process of generating an acid catalysed organic-inorganic hybrid sol-gel, providing a polyaniline solution in which the polyaniline component is not polymerised or is not formed as a composite, combining the sol-gel with the polyaniline solution to disperse the polyaniline in the sol-gel, coating the substrate with the sol-gel polyaniline solution, and curing the coating at the substrate so as to form an organic/inorganic network coating in which the polyaniline is dispersed such that the majority and preferably all of the polyaniline is not chemically bonded to the organic/inorganic network and that the polyaniline is uncoordinated within the coating; the sol-gel coating divided into at least two compositionally different regions including an outer region relative to the metal layer and an intermediate bonding region positioned between the outer region and the metal layer; the polyaniline dispersed within the outer region and the intermediate region of the coating; the intermediate region comprising a composition resultant from the reaction of the sol-gel coating and the metal layer relative to a composition of the outer region; the sol-gel coating chemically bonded to the metal layer via the intermediate region.

According to a third aspect of the present invention there is provided a method of protecting a metal substrate from corrosion comprising: generating an acid catalysed organic-inorganic hybrid sol-gel; providing a polyaniline solution in which the polyaniline component is not polymerised or is not formed as a composite; combining the sol-gel with the polyaniline solution to disperse the polyaniline in the sol-gel; coating the substrate with the sol-gel polyaniline solution; and curing the coating at the substrate so as to form an organic/inorganic network coating in which the polyaniline is dispersed such that the majority and preferably all of the polyaniline is not chemically bonded to the organic/inorganic network and that the polyaniline is uncoordinated within the coating; wherein the resultant coating is divided into at least two regions including an outer region relative to the coating and an intermediate bonding region positioned between the outer region and the substrate; wherein the intermediate region comprises a composition resultant from the reaction of the sol-gel coating with the substrate relative to a composition of the outer region; and wherein the polyaniline is dispersed within both the outer and intermediate regions.

Optionally, the method comprises activating the anticorrosion properties of the coating by subjecting the coating to alkaline conditions.

In particular, the pH of the initial sol-gel may typically be less than 6 and is preferably less than 3.

The resultant coating is divided into at least two regions or '*layers*' including an outer layer relative to the coating and an intermediate bonding layer positioned between the outer layer and the substrate.; Reference to '*regions*' or '*layers*' within the specification refers to in the region of the coating that comprises a composition resultant from the reaction of the sol-gel layer with the substrate. This region may be considered to have a gradual compositional change with regard to the remaining coating region in a direction away from the substrate and towards the solid-air interface. Reference to an *'intermediate layer'* is not restricted to a compositional different layer having defined compositional boundaries with respect to other regions of the coating. That is, the concentration of the composition (resultant from the reaction of the sol-gel layer with the substrate) may decrease gradually away from the substrate towards the solid-air interface of the coating, perpendicular to the substrate. In particular, the coating may comprise a gradual compositional change from the '*outer layer*' through the '*intermediate layer*' such that the layer regions diffuse into one another with regard to their composition. Accordingly, in certain embodiments there is no defined boundary or interface between the 'layers'.

In particular, the sol-gel polyaniline hybrid system may be considered to offer a 'self-healing' capacity at damaged sites in the coating in turn providing comprehensive anticorrosion properties in a wide variety of otherwise corrosive environments.

Optionally, the volume ratio of the polyaniline sol to the sol-gel is in the range 20:1 to 1:1.

Optionally, the step of activating the anticorrosion properties comprises applying an alkaline electrolyte solution to the coating and allowing the solution to diffuse into the coating. In particular a saline solution may be used for activation wherein the substrate and coating are dipped into the saline solution or the saline solution is applied, in particular sprayed onto the coating so as to diffuse through the coating thickness to the underlying substrate.

Preferably, the method and apparatus further comprises doping the polyaniline solution with silica nano-particles prior to combining the sol-gel and the polyaniline solution. Dispersing silica nano-particles within the coating has been found to increase the scratch resistance of the coating and to increase adhesion at the substrate when exposed to mechanical shearing forces.

Optionally, the method may comprise pre-treating the substrate prior to coating with the sol-gel and polyaniline solution by any one or a combination of the following: applying one or more chemical compounds to the substrate; applying mechanical abrasion to the substrate to roughen the substrate surface.

Optionally, the sol-gel may comprise any one or a combination of the following: a silica-sol; a titanium sol and/or a zirconia sol. The hybrid sol-gel is typically formed from at least one organic precursor and at least one inorganic precursor such that the organic and inorganic components are hybridised in the resulting coating structure. That is, the organic and inorganic components are chemically bonded together to create a fully hybridised organic-inorganic structure. The inventors have identified that forming the sol-gel from organic and inorganic precursors enables control of the coating thickness and the required curing temperature. In particular, the present coating may be room temperature cured. The curing temperature is determined, in part, by selecting the type and relative concentrations of the organic and inorganic sol-gel precursors. Using a hybrid inorganic-organic sol-gel system also increases the available methods of coating the substrate.

Optionally, the step of curing the coating comprises heating the coating above room temperature. The step of curing the coating may comprise heating the coating above room temperature and below 350°C for a period from 10 seconds to 4 days.

Optionally, the metal substrate comprises any relatively lightweight metal and metal alloy and particularly those used for the aerospace and aviation industries. In particular, the metal substrate may comprise any one or a combination of the following: aluminium; aluminium alloy; magnesium; magnesium alloy; steel; 2024 aluminium; stainless steel; zinc or zinc alloy or titanium or titanium alloy.

Importantly, the polyaniline is dispersed within the as-formed coating such that the majority, if not all of the polyaniline is not chemically bonded to the organic-inorganic network and is therefore mobile within the coating structure. Additionally, the polyaniline component is not polymerised with the coating which would otherwise inhibit its mobility and/or diffusion capability within the coating. Additionally, the polyaniline, being uncoordinated within the coating, is capable of undergoing redox reactions and in turn providing the anti-corrosion property.

The present coating finds particular application for coating an aircraft fuselage and other aircraft components. The coating is also suitable to coat other substrates exposed to weathering corrosion including marine vessels and structures.

A specific implementation of the present invention will now be described, by way of example only and with reference to the accompanying figures in which:
figure 1 indicates filiform corrosion on Mg alloy AZ31 treated by an Alodine 1200™ conversion coating;
figure 2 indicates filiform corrosion on Mg alloy AZ31 coated with a sol-gel coating without corrosion inhibitors;
figure 3 illustrates impedance behaviour of the sol-gel coating (without corrosion inhibitors) in Harrison's solution;
figure 4 illustrates scratched surfaces of Mg alloy AZ31 with a high-ratio doped sol-gel/PANI coating after 21 days immersion in Harrison's solution;
figure 5 illustrates impedance behaviour of the high-ratio doped sol-gel/PANI coating in Harrison's solution;
figure 6 illustrates bode plots of a "relatively" low-ratio doped sol-gel/PANI coating in 3.5% NaCl solution;
figure 7 is equivalent circuits used for numerical fitting of the EIS data from (A) before 72 h; and (B) 72 to 120 h;
figure 8 illustrates evolution of the outer layer sol-gel coating resistance (Rₒ) and coating capacitance (Cₒ or Qₒ) following immersion in 3.5% NaCl solution obtained by numerical fitting using the equivalent circuits given in figure 7;

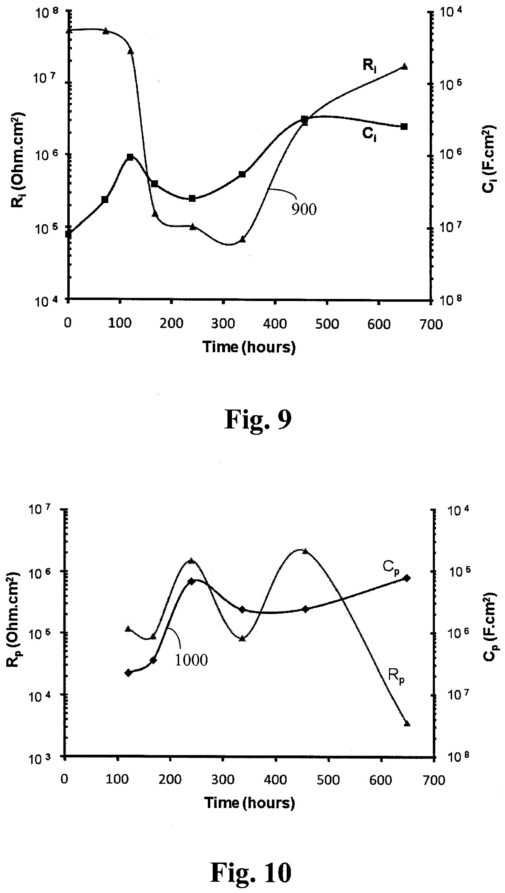

figure 9 illustrates evolution of the interfacial layer sol-gel coating resistance (Rᵢ) and coating capacitance (Cᵢ or Qᵢ) following immersion in 3.5% NaCl solutions obtained by numerical fitting using the equivalent circuits given in figure 7;
figure 10 illustrates evolution of the passive layer sol-gel coating resistance (Rₚ) and coating capacitance (Cₚ or Qₚ) following immersion in 3.5% NaCl solutions obtained by numerical fitting using the equivalent circuits given in figure 7;
figure 11 is a photo of low-ratio sol-gel/polyaniline coated samples after 500 h salt spray test;
figure 12 is a back scatter electron image of a cross section of the hybrid low-ratio-doped sol-gel/polyaniline coating;
figure 13 is an image of 2024 aluminium substrate coated with the sol-gel and polyaniline coating re-immersed in alkaline conditions and subjected to 72 hours saline solution to assess to the anticorrosion properties; and
figure 14a is a high resolution XPS N s1 core level spectra for aluminium AA 2024 coated with a polyaniline coating;
figure 14b is a high resolution XPS N s1 core level spectra for glass with a polyaniline coating;
figure 14c illustrates XPS high resolution Al 2p core level spectra with sputtering time;
figure 14d illustrates individual Al 2p core level spectra across the substrate and coating interface;
figure 15 illustrates depth profile changes in aluminium components with sputtering time;
figure 16 illustrates the compositional layer profile of the sol-gel outer layer and the sol-gel intermediate layer in direct contact with the underlying 2024 aluminium substrate.

### Example 1

### Preparation of hybrid sol-gel coatings

Chemical oxidation of aniline was performed by oxidation with ammonium persulphate in 1 M hydrochloric acid solution. 5.0 ml of 0.107 M aniline was dissolved in 300 ml of 1 M HCl at 0 to 5 °C and stirred for 1 hour. A solution of 5.6 g ammonium persulphate in 1 M 100 ml HCl was added dropwise to aniline solution over a period of 15 min with vigorous stirring. The solution was then continually stirred at 0 to 5 °C for 6 hours. The precipitate was collected with a Buchner funnel and washed with four portions of 50 ml 1 M HCl. The precipitate was dried at 60 °C for 24 hours, the HCl doped PANI (Emeraldine Salt, ES) was obtained as a green powder. The basic form of PANI (Emeraldine Base, EB) was obtained by stirring the ES with 1 M NH₄OH for 3 hours followed by filtration and drying. Organic-inorganic matrix silica-based sols, catalysed by HNO₃ acid, were prepared and used. The mixture of the PANI-doped sol was prepared in two ratio levels, denoted low and high. To increase the scratch resistance of the hybrid sol-gel/PANI coating, 1.0 wt% silica nano-particles (10 to 20 nm) were added in the final sol.

Die-cast magnesium alloy AZ31 (containing approx. 3 wt.% Al and approx. 1 wt.% Zn) was immersed in an acidified Industrial Kleen IKB 501 cleaning solution (Concoat Limited Company) for about 30 to 60 seconds to clean the surface. The coating was then applied to one side of the AZ31 alloy surface using a spray method. The coated magnesium alloy was oven dried in air at 75 °C for 5 min and then spray-coated again. Finally the coated AZ31 sample was left in the oven to be dried in air at 75 °C for no less than 3 hours. For comparison, one commercially available pre-treatment/coating ('Alodine 1200' pretreatment solution (Henkel) and three different sol-gel samples were investigated; i.e. sol-gel coatings without PANI (denoted as SGO), sol-gel coatings with high doped ratio of PANI (denoted as SGH), and sol-gel coatings with low doped ratio of PANI (labelled as SGL).

### Experimental techniques

Coatings were immersed in either 3.5 wt. % NaCl solution or dilute Harrison's solution (0.35 wt. % (NH₄)₂SO₄ and 0.05 wt.% NaCl) at 20 °C. Corrosion tests were carried out using a conventional three-electrode cell arrangement with the sample (area: 41 cm²) as the working electrode, a 'saturated' calomel reference electrode and a platinum counter electrode. Electrochemical impedance measurements were obtained at the measured open circuit potential (Eocp) values applying ±10 mV perturbation, in the frequency range 10⁵ to 10⁻² Hz. EIS data was recorded for samples immersed in Harrison's or 3.5 wt. % NaCl solution.

Salt spray testing (ASTM B 117) was carried out at 35 °C in a 5 wt. % NaCl spray at 100 % humidity. Images were recorded every 120 hours to compare the performance of samples throughout the test period. To assess adhesion a sellotape^{™} test was carried out as follows: the samples were scratched using a razor blade to form a cross hatch. Sellotape^{™} tape was applied to the cross-hatch and fixed well before peeling it from the surface. The sellotape^{™} was then examined for signs of detachment of the coating. The thickness of the coating was estimated through the cross section image of the coated sample using a scanning electron microscope, Philips XL40, at 20 kV. Thin sputtered carbon films were applied to coatings in order to prevent surface charging during SEM examination.

### Corrosion assessment of bare and coated AZ31

### Corrosion characteristics of AZ31 magnesium alloys

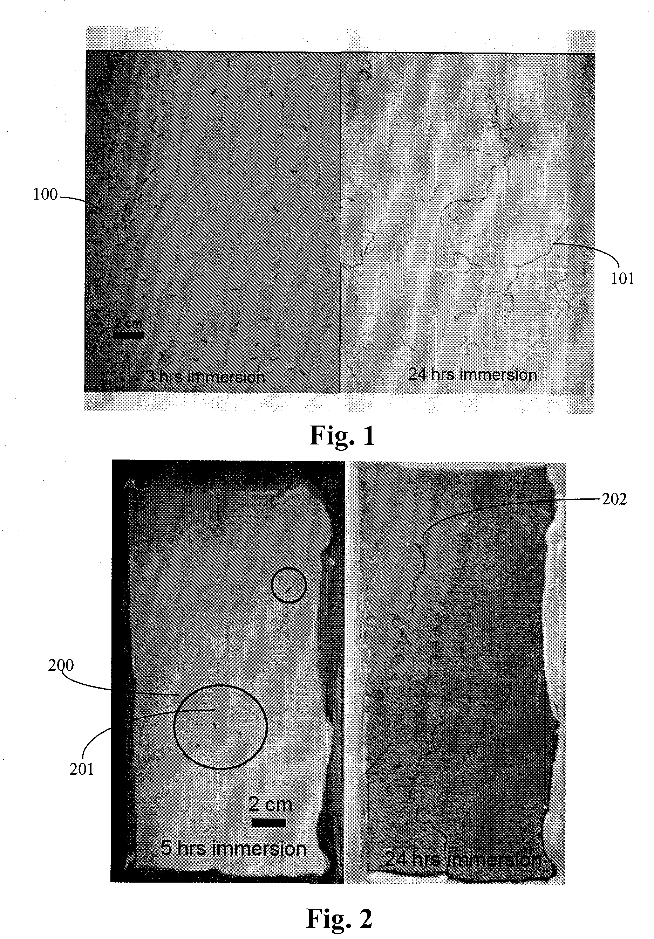

Bare AZ31 showed significant corrosion activity within several minutes after immersion in the 3.5 wt. % NaCl solution as seen by the generation of hydrogen bubbles. Characteristic filiform corrosion was observed on samples subject to a commercial surface pretreatment, notably 'Alodine 1200' chromate conversion coating. Optical photos of typical surfaces pre-treated with the 'Alodine' conversion coating are shown in figure 1, following immersion times of 3 hours and 24 hours respectively within Harrison's solution (a significantly less aggressive environment than 3.5 wt. % NaCl). Filiform corrosion 100, several millimetres in length, is spread widely over the whole surface after 3 hours immersion, as detailed in figure 1. Filaments 101 propagated in a random direction following prolonged immersion time up to 24 hours, as detailed in figure 1.

### Corrosion behaviour of the sol-gel coating without PANI (SGO)

A non-doped (without PANI) sol-gel coating on AZ31 showed significant corrosion activity, particularly at defect sites in the coating where hydrogen bubbles were observed at the surface of the coating. This behaviour was typical when inhibitor-free sol-gel coatings were immersed in 3.5% NaCl solution for just 1 to 2 hours. For this reason it is not possible to carry out EIS testing in 3.5 % NaCl hence a dilute Harrison's solution was chosen to assess the corrosion behaviour of this particular coating system.

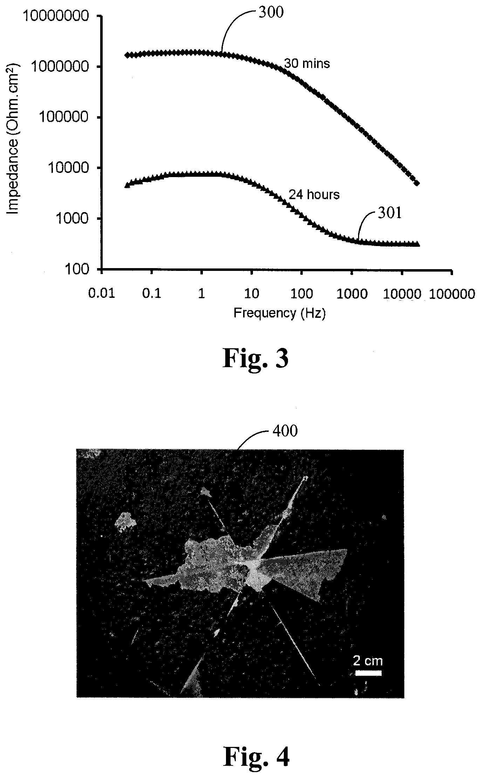

On immersion in Harrison's solution filiform corrosion 201 is observed beneath the SGO coating after only 2 to 5 hours, as shown in figure 2 (circled sites 200). The filiform filaments 202 are seen to propagate sporadically in a random direction following further immersion up to 24 hours. The electrochemical response of the sol-gel coated SGO sample was then evaluated within Harnson's solution using EIS, as shown in figure 3. Here the coated AZ31 showed an initial high impedance 300 (2 MΩ.cm² at 0.05 Hz) after 30 mins of immersion due to the barrier properties of the coating. At this stage the electrolyte has not fully reached the surface of the alloy. However, the impedance 301 dramatically decreased to about 0.005 MΩ.cm² after 24 hours immersion. This decrease in impedance correlates with the appearance of filiform corrosion, as shown in figure 2.

### Corrosion resistance of the hybrid sol-gel coating with high-ratio of PANI (SGH)

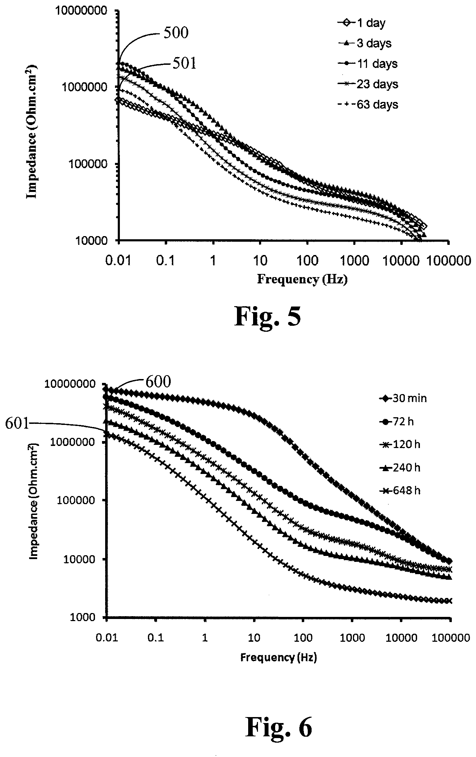

It was noted that the high PANI ratio SGH coating suffered from poor adhesion of the coating to the magnesium alloy substrate, resulting in delamination after 24 hours immersion in 3.5 wt. % NaCl solution. Despite this poor adhesion, it was considered worthwhile to explore the "self-repairing" functionality of the doped PANI using dilute Harrison's solution. Referring to figure 4, the SGH sample was damaged by scratching the surface before immersion. The scratch 400 was prepared using a razor blade giving a scratch width of around 100 µm, which penetrated down to the substrate. After immersion in Harrison's solution for three weeks, the sample was taken out and then washed in tap water and dried. Whilst delamination was seen around the scratched area, no pitting or filiform corrosion occurred where the surface was exposed to the solution; and it was noted that a passive film had formed referring to figure 4. This was confirmed by a colour change of the surface, at the delaminated and scratched sites. This passive film has therefore protected the alloy from corroding, exhibiting a "self-healing" capability, as provided by the PANI. EIS measurements were also carried out on a non-scratched sample at E_{ocp} = - 1610 mV (SCE). The impedance curves of the SGH coating are shown in figure 5. The impedance data showed very unstable behaviour in the first 20-24 hours reflecting the fact that the electrolyte had not fully penetrated the coating. This is due to the initial hydrophobic coating property. After this period, a relatively low impedance of 0.8 MΩ.cm², at 0.01 Hz frequency, is observed. The reason for this may be due to the highly porous structure of the coating, being related to the high PANI concentration within the sol-gel coating and the 'conducting' nature of the PANI. The electrolyte reached the surface of the substrate and some activity occurred. It was observed that the impedance recovered after 3 days immersion reaching the highest value 500 of 3.0 MΩ.cm² at 0.01Hz after 11 days immersion. This is due to the formation of a passive layer on the surface reflecting the 'self-healing' functionality of polyaniline in the sol-gel coating. On further immersion, the impedance of the coating gradually decreased to 1 MΩ.cm² (501) after 63 days (1500 hours) immersion.

In summary, the SGH coating provides good corrosion protection when immersed in Harrison's solution; however, it exhibited poor adhesion particularly when immersed in a severely corrosive environment such as 3.5 wt. % NaCl solution indicating that the high content of PANI in the composition of the coating hinders the formation of a chemical bond to the substrate which has been observed through the network of the silica-based sol-gel matrix. On this basis, the concentration of PANI in the coating was reduced and adjusted to an appropriate ratio in order to obtain a satisfactory chemical bond to the substrate.

### Corrosion performance of the sol-gel coating with relatively low-ratio doped PANI (SGL)

Evolution of Bode plots for the SGL hybrid sol-gel coating is shown in figure 6. Very high impedance 600 (close to 10 MΩ.cm²) is observed after 30 minutes immersion in 3.5 wt. % NaCl solution with E_{ocp} = -1620 mV (SCE). On extended immersion in the electrolyte the impedance slowly decreases as the electrolyte begins to reach the substrate surface. However, the impedance value 601 remains above 1 MΩ.cm² even after 648 hours (27 days) immersion time. This type of hybrid sol-gel/PANI coating therefore provides very good long term corrosion protection to the AZ31 with no visible signs of corrosion after 648 h immersion in 3.5 wt. % NaCl.

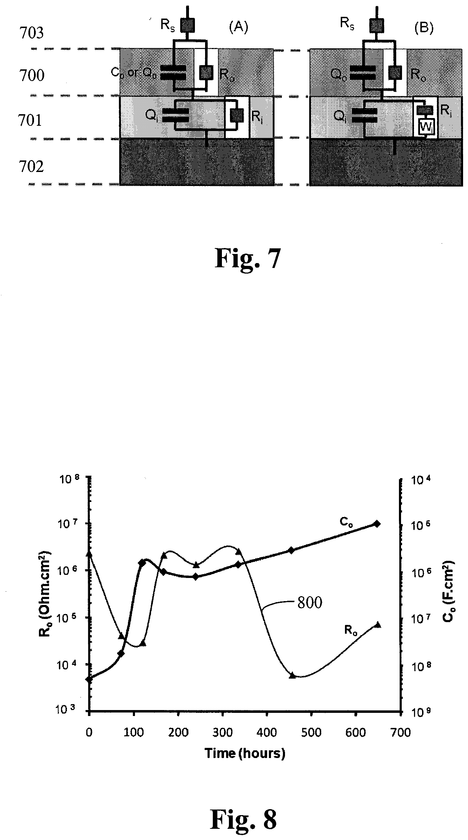

Detailed interpretation of the EIS spectra was performed by numerical fitting of the Bode plots using the equivalent circuits presented in figure 7. Referring to figure 7, two layers 700, 701 are initially formed after the sol-gel is applied to a substrate 702. That is the layer of the sol-gel coating itself forms an outer layer 700 and a bonding nano-layer 701 or interfacial layer positioned between the outer layer 700 and the substrate 702. The bonding layer 701 is of the order of 20 to 30 nm in thickness with composition resultant from the reaction between the sol and the substrate.

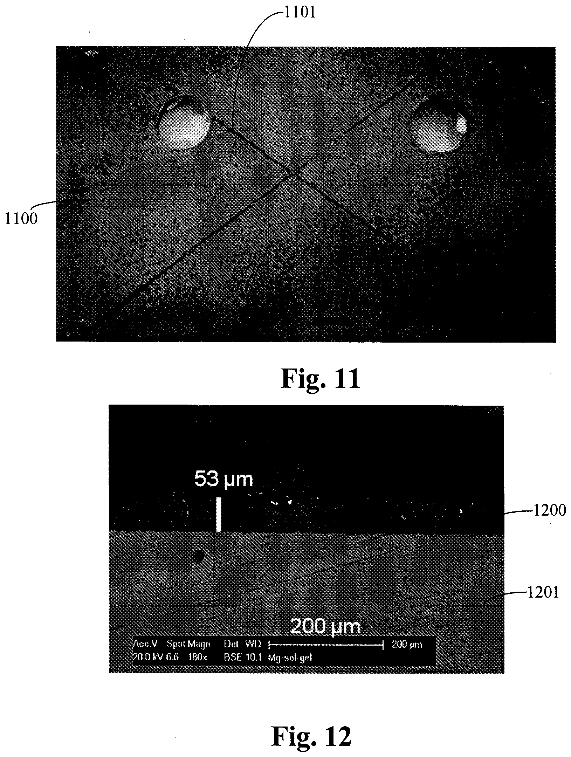

The corrosion resistance of this sol-gel coating has also been demonstrated by conducting salt spray tests at 35 °C within a 5 wt. % NaCl spray at 100 % humidity. Figure 11 shows a sample 1100 after 500 hours salt spray testing. Examination of the sample revealed no filiform corrosion or creepage along the scratch 1101, further confirming the good performance of this hybrid sol-gel coating.

### SEM characterisation

A back-scatter electron image of the cross section of the hybrid sol-gel coating is shown in figure 12. The thickness of the coating 1200 on the substrate 1201 was measured using a cross-section image and found to be around 50 to 60 µm.

### Adhesion and scratch resistance

The adhesion of the sol-gel coating was assessed following 500 hours immersion in 3.5wt% NaCl solution by using the sellotape^{™} test previously mentioned. No signs of detachment of the coating were observed, indicating good adhesion of the coating to the substrate. The coating also showed a pencil hardness greater than 6H with good scratch resistance. This is comparable with a commercial fusion bonded epoxy powder coating.

### Example 2

### Corrosion assessment of 2024 aluminium alloy (AA2024)

### Activation of the polyaniline

Examination of the sol-gel and polyaniline coating on AA2024 revealed pitting in the scratched area during salt spray testing. However, no pits appeared away from the scratched area. Images of saline solution treatment of samples and visual inspection noted that the pits initiated in the first few hrs (before 72hrs) then propagated at these positions as time elapsed without the development of undercutting or delamination. Importantly, no new pits appeared after 72hrs. These results suggest the coating has one or more of the following properties: i) the coating has a cathodic potential with respect to aluminium 2024; ii) the coating acts as a barrier coating; and iii) the assumed passive 704 film was not completely formed before being subject to treatment by saline solution.

If the coating is cathodic to the substrate or has barrier properties, pitting, general corrosion, undercut and delamination would appear at the scratch as a result of the salt electrolyte treatment however, none of these phenomena occurred. Moreover, scratch test results showed that the coating exhibits "self-healing" behaviour.

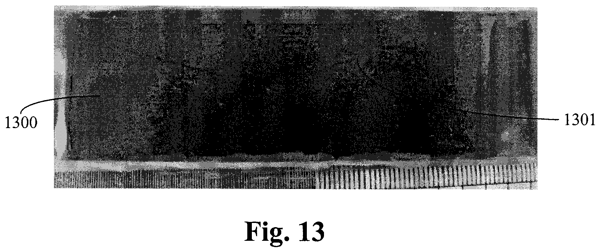

The third property above would appear to be the most plausible. To investigate this a saline solution test was conducted as follow: the sol-gel and polyaniline coating (on an aluminium substrate) sample was pre-immersed in 3.5% NaCl solution for 5 day then scratched before exposure to saline solution for 72 hrs. From figure 13 it is clear that the pre-immersed sample 1300 did not experience any pitting or undercutting up to 72 hrs in the saline solution at the scratched region 1301.

This result combined with immersion test results suggest that the present sol-gel-polyaniline coatings require a few days of immersion in a solution to be "activated" so as to form a protective layer at the coating/metal interface. The inventors suggest that this behaviour occurs when sufficient electrolyte is present at the metal/polymer interface.

The post-treatment procedure with an alkaline electrolyte appears to have two advantages: i) it heals any defects that are produced during the spray deposition of the coating by forming a homogeneous thin film; and ii) it enhances the initial corrosion resistance of the sol-gel polyaniline coating.

Visual inspection of the post-treated sample noted a change in the sample colour from blue (EB) to greenish blue (ES) after the post-treatment process. This change in colour may be due to a change in oxidation state of polyaniline from the base form to the doped form.

Furthermore, the electrical conductivity of the polyaniline after immersion in deionised water at 60°C for 5 min was significantly improved, 10⁻⁶ S.cm⁻¹ with respect to that before immersion (10⁻⁹ S.cm⁻¹). A similar value of conductivity was obtained when a free standing film of polyaniline was immersed in 1 % NaCl solution for 3 days. XPS analysis of the free standing film of polyaniline, after immersion in 1% NaCl for 3 days, identified that the change in electrical conductivity was mainly due to an increase of doped species (-NH⁺) at the expense of N=C species i.e.[-NH⁺]/[N=C] changes from 0.3 to 2.7.

### The interfacial passive layer

XPS results for the coated pure and 2024 aluminium alloy, identified three components of aluminium. Two of these components, notably aluminium metal and aluminium oxide, were detected at all stages of depth profile. However, a new component (Al-X) was detected only at the coating-substrate interface at a binding energy of 74.6±0.15eV fwhm=1.5±0.1. Furthermore, the concentration of Al-X appears to increase as the depth profile progresses from the aluminium substrate towards the coating. It is suggested that the compound formed at the coating-substrate interface 704 is, in part, responsible for corrosion protection. The binding energy of 74.6±0.15eV may relate to one or more of the following: Al₂O₃; Chemisorbed oxygen on Al surface; Substoichiometric aluminum oxide due to ion bombardment; AlOOH; Al-O-C; Al-O-N complex;
Based on XPS results, it is possible that one or more of the above compounds can exist at the coating-substrate interface 704. Polyaniline (EB) consists of two group; an oxidised group (containing N=C) and a reduced group (containing N-C), the oxidised group is significantly more reactive with metal atoms than the reduced group. Therefore, reaction between polyaniline and the aluminium substrate is most likely via this oxidised group. This is supported by a change of relative concentration of [N=C]/[N-C] across the coating-substrate interface where N-C concentration increased as the depth profile goes towards aluminium, at the expense of N=C. The imine group, N=C, seems to be reduced to a state equivalent to an amine group, N-C.

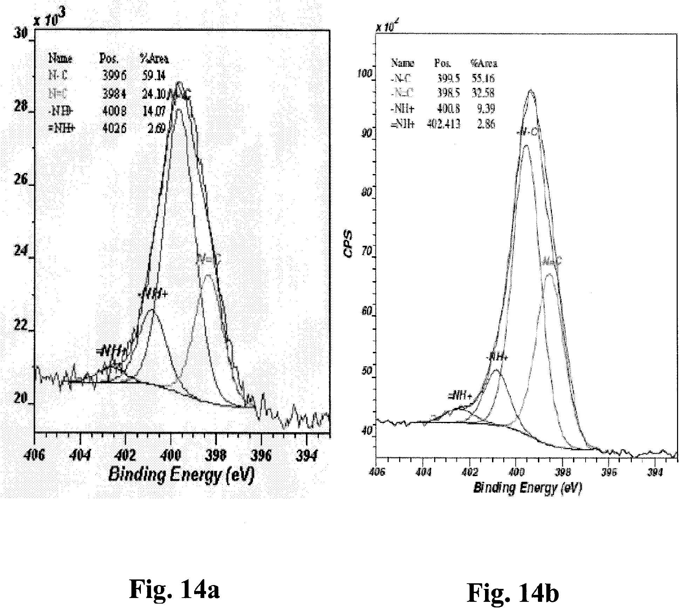

To elucidate the self-healing functionality of the present coating, XPS analysis was carried out on aluminium and glass substrates. The high resolution N1 core level of PANI coated AA2024 shown in Figure 14a. Four peaks appeared at 398.5, 399.5, 400.7 and 402.5. According to the reported results of polyaniline XPS analysis these peaks are attributed to nitrogen bonds, as shown in the following table:

**Table 1: XPS analysis of Nitrogen atom components**

| Bonding Energy [eV] | Type of N atom |
|---|---|
| 398.5 | -N=C- |
| 399.5 | -NH-C |
| 400.7 | -N⁺H- |
| 402.5 | =N⁺H- |

To detect any change in PANI oxidation state related to interaction with aluminium substrate, the high resolution XPS N s1 core level of PANI coated 2024 (figure 14a) was compared to that of PANI coated glass (Figure 14b). Here the N=C component increases from 24% to 32 %, while the N-C component decreases from 59% to 55%. Moreover =NH+- decreased from 14 to 9 %. This reflects a decrease in the N-Q-N (oxidised form of PANI (EB) chain) bonding of the polyaniline that is a reduction in the oxidised form in the PANI chain. At the same time there is an increase in the N-B-N bonding of the polyaniline (reduced form of PANI (EB) chain). The relative concentrations of the oxidised and reduced forms of PANI (EB) give an insight into an understanding of the changes taking place when PANI is applied to the metal substrate. The relative concentration of oxidised to reduced forms was decreased from 0.58 to 0.45 in PANI/NMP film and PANI coated AA2024 respectively i.e. the PANI is reduced when applied to the substrate.

The XPS results suggest that PANI is reduced when applied to the Al substrate. This postulation is not valid unless the Al substrate or other species, in the PANI coating system, is oxidised to complete the electrochemical reaction. Therefore in order to study the Al substrate beneath the PANI coating, XPS depth profiling was conducted. Pure aluminium (99.99) was used to avoid any other interaction between the PANI and the substrate alloying elements. Aluminium was evaporated under vacuum (10⁻⁵ torr) on a free-standing film of PANI (EB) at 60±5°C. The evaporation chamber was left under vacuum for one hour before evaporation to remove surface gases. The evaporated aluminium thickness was adjusted to ≈50 nm and the XPS depth profile was carried out from the aluminium side to polymer.

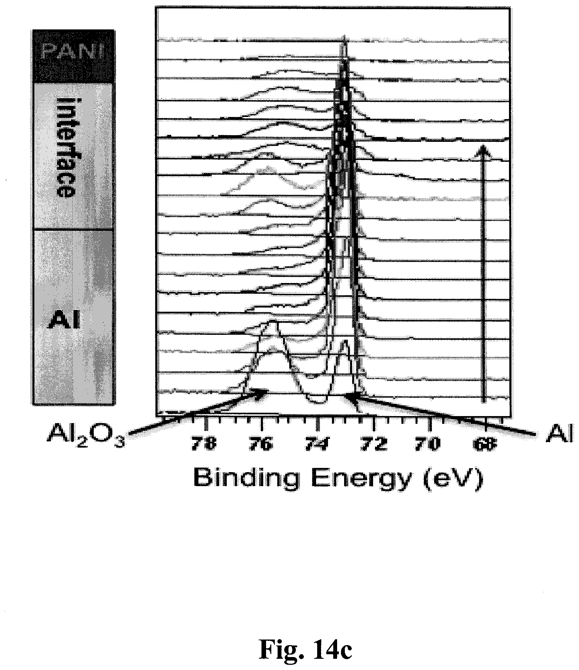

The change of the Al 2p core level with sputtering time is shown in Figure 14c, where two peaks, at 72.8 eV and 75.6 eV, are observed. The first peak remained at the same position until the sputtering process was complete. However, the oxide peak at 75.6 eV gradually decreased up to the interface and then increased again as sputtering continued, reflecting the change in composition of the interfacial layer.

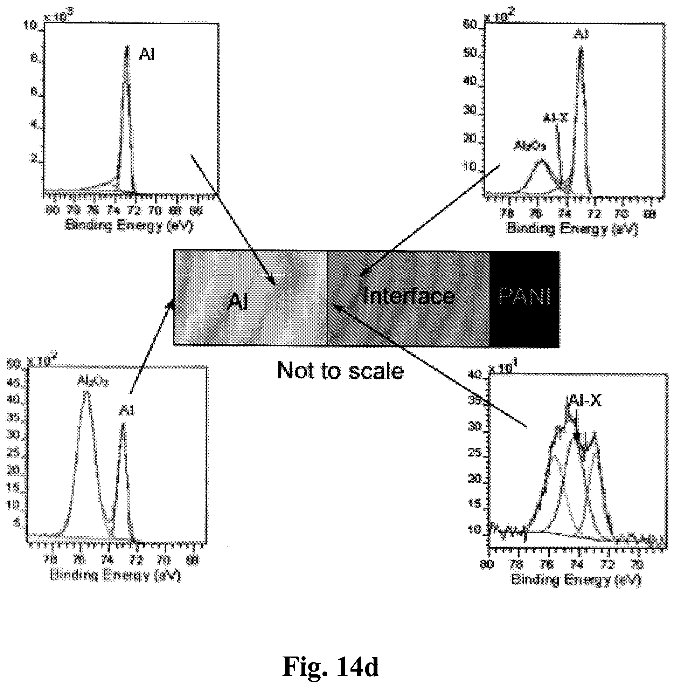

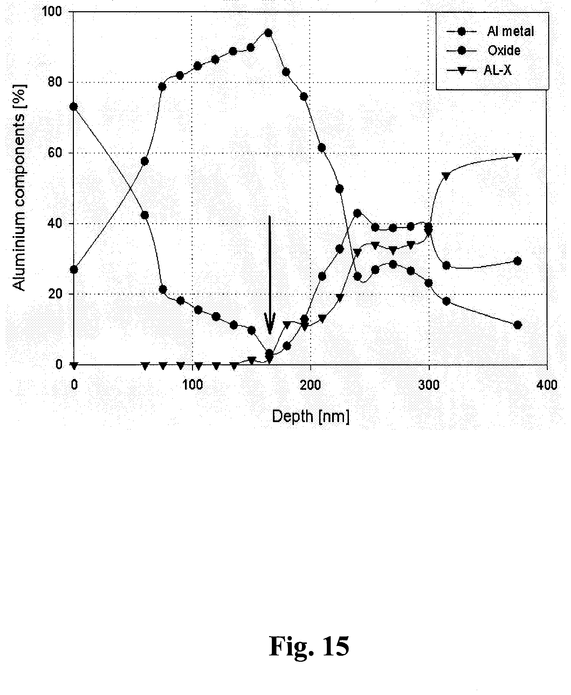

Detailed analysis of individual Al 2p core level spectra, as shown in figure 14d confirmed that a new component existed at 74.5 eV and the percentage of this component, denoted "Al-X", increased within the interfacial region as sputtering time increased. This is further confirmed in the depth profile analysis shown in figure 15 where it can be seen that the "Al-X" component begins to appear at the interface (arrowed), at a sputtering time of 170-180s, and increases with sputtering time, towards the direction of the PANI. At the same time, the aluminium oxide decreases from the outer layer of the aluminium surface up to the interface region whereupon it begins to increase again. Over the same sputtering period, the Al metal increased up to the PANI/Al interface and then subsequently decreased.

Moreover, it can be seen that the oxygen content gradually decreases from the surface to the PANI/Al interface region where it increases sharply and then decreases to a near zero value. Correspondingly the aluminium content decreases gradually at the interface region while, the carbon and nitrogen content gradually increases from the interface up to the end of the sputtering process, where the sum of their content was over 99%. Note: carbon appears on the surface of the aluminium before sputtering, however, it is not present after sputtering and is an artefact being due to atmospheric contamination.

Accordingly, the inventors suggest that polyaniline (EB) interacts with aluminium to form a complex layer or region resultant from the reaction between the underlying substrate and the polyaniline and/or sol-gel. The oxidised part of polyaniline (N=C) interacted with Al atoms creating an equivalent state to the amine group. This interaction seems to be enhanced by ionic species that diffused in the coating-substrate interface.

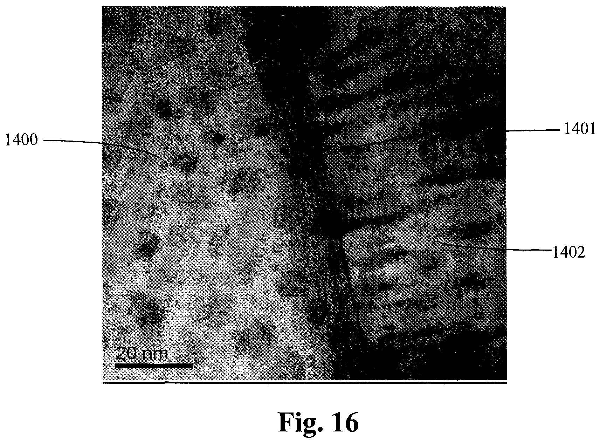

Figure 16 is an image of the sol-gel and polyaniline coating formed as a protective anticorrosion coating upon 2024 aluminium. The image confirms the compositionally different layers of the coating having an outer sol-gel layer 1400 and an intermediate sol-gel layer 1401, the polyaniline being dispersed within both layers 1400 and 1401. The intermediate layer 1401 is bonded directed to the underlying aluminium substrate 1402.

The inventors have determined that polyaniline can protect AA2024. However, it is easily delaminated from the metal substrate. Similarly, a silica sol-gel coating only provides corrosion protection when inhibitors are present in the sol-gel. However by combining both polyaniline and an organic-inorganic hybrid sol-gel it is possible to successfully prepare and deposit a highly protective coating on AA2024. The corrosion protection performance of the coating was found to be dependent upon the ratio of the PANI/sol-gel ratio. An EIS study showed that the PANI/sol-gel combination successfully protected AA2024 in both acidic and neutral 3.5 % NaCl solutions for long periods up to 2 and 24 months respectively. Self-healing behaviour was noted for samples subjected to damage in the form of a scratched surface with SVET and EIS analysis showing recovery of the corrosion resistance within hours of the coating being damaged. The corrosion performance of the coating system is concluded to be due to the unique combination of the barrier properties of the sol-gel, the redox capacity of the polyaniline and the formation of a new nanolayer at the PANI/sol-gel and substrate interface.

## Claims

1. A metal substrate comprising:
an acid catalysed organic-inorganic hybrid coating chemically bonded to the substrate obtainable by a sol-gel process of generating an acid catalysed organic-inorganic hybrid sol-gel, providing a polyaniline solution in which the polyaniline component when incorporated within the resulting coating is not polymerised with the coating or is not chemically bonded to the coating, combining the sol-gel with the polyaniline solution to disperse the polyaniline in the sol-gel, coating the substrate with the sol-gel polyaniline solution, and curing the coating at the substrate so as to form an organic-inorganic network coating in which the polyaniline is dispersed such that the majority and preferably all of the polyaniline is not chemically bonded to the organic-inorganic network and that the polyaniline is uncoordinated within the coating;
the sol-gel coating divided into at least two compositionally different regions including an outer region relative to the substrate and an intermediate bonding region positioned between the outer region and the substrate;
the polyaniline dispersed within the outer region and the intermediate region of the coating;
the intermediate region comprising a composition resultant from the reaction of the sol-gel coating and the substrate relative to a composition of the outer region;
the sol-gel coating chemically bonded to the substrate via the intermediate region.

2. The metal substrate as claimed in claim 1 wherein the sol comprises a silica or titanium sol.

3. The metal substrate as claimed in any preceding claim wherein the metal comprises:
aluminium or aluminium alloy;
magnesium or magnesium alloy;
steel;
2024 aluminium;
stainless steel;
zinc or zinc alloy;
titanium or titanium alloy;

4. The metal substrate as claimed in any preceding claim further comprising silica nano-particles dispersed within the sol-gel coating.

5. The substrate as claimed in any preceding claim wherein the thickness of the coating is between 0.1 µm to 100 µm.

6. The metal substrate as claimed in any preceding claim wherein the intermediate region comprises a thickness in the range 5 to 100 nm.

7. The metal substrate as claimed in any preceding claim wherein the intermediate region comprises a thickness in the range 1 to 50 nm.

8. A substrate comprising:
a metal base layer;
an acid catalysed organic-inorganic hybrid coating chemically bonded to the metal layer obtainable by a sol-gel process of generating an acid catalysed organic-inorganic hybrid sol-gel, providing a polyaniline solution in which the polyaniline component when incorporated within the resulting coating is not polymerised with the coating or is not chemically bonded to the coating, combining the sol-gel with the polyaniline solution to disperse the polyaniline in the sol-gel, coating the substrate with the sol-gel polyaniline solution, and curing the coating at the substrate so as to form an organic-inorganic network coating in which the polyaniline is dispersed such that the majority and preferably all of the polyaniline is not chemically bonded to the organic-inorganic network and that the polyaniline is uncoordinated within the coating;
the sol-gel coating divided into at least two compositionally different regions including an outer region relative to the metal layer and an intermediate bonding region positioned between the outer region and the metal layer;
the polyaniline dispersed within the outer region and the intermediate region of the coating;
the intermediate region comprising a composition resultant from the reaction of the sol-gel coating and the metal layer relative to a composition of the outer region;
the sol-gel coating chemically bonded to the metal layer via the intermediate region.

9. A method of protecting a metal substrate from corrosion comprising:
generating an acid catalysed organic-inorganic hybrid sol-gel;
providing a polyaniline solution in which the polyaniline component when incorporated within the resulting coating is not polymerised with the coating or is not chemically bonded to the coating;
combining the sol-gel with the polyaniline solution to disperse the polyaniline in the sol-gel;
coating the substrate with the sol-gel polyaniline solution; and
curing the coating at the substrate so as to form an organic-inorganic network coating in which the polyaniline is dispersed such that the majority and preferably all of the polyaniline is not chemically bonded to the organic-inorganic network and that the polyaniline is uncoordinated within the coating;
wherein the resultant coating is divided into at least two regions including an outer region relative to the coating and an intermediate bonding region positioned between the outer region and the substrate;
wherein the intermediate region comprises a composition resultant from the reaction of the sol-gel coating with the substrate relative to a composition of the outer region; and
wherein the polyanaline is dispersed within both the outer and intermediate regions.

10. The method of claim 9 wherein the pH of the initial sol-gel is less than 6.

11. The method as claimed in any one of claims 9 to 10 wherein the volume ratio of the polyaniline sol to the sol-gel is in the range 20:1 to 1:1.

12. The method as claimed in any one of claims 9 to 11 further comprising doping the polyaniline solution and/or the sol-gel solution with silica nano-particles prior to combining the sol-gel and the polyaniline solution.

13. The method as claimed in any one of claims 9 to 12 further comprising pre-treating the substrate prior to coating with the sol-gel and polyaniline solution by any one or a combination of the following:
applying one or more chemical compounds to the substrate;
applying mechanical abrasion to the substrate to roughen the substrate surface.

14. The method as claimed in any one of claims 9 to 13 wherein the sol-gel comprises any one or a combination of the following:
a silica-sol;
a titanium sol;
zirconia sol.

15. The method as claimed in any one of claims 9 to 14 wherein the step of curing the coating comprises curing the coating at room temperature.

## Patentansprüche

1. Metallsubstrat, umfassend:
eine säurekatalysierte organisch-anorganische Hybridbeschichtung, die chemisch an das Substrat gebunden ist, erhältlich durch ein Sol-Gel-Verfahren der Erzeugung eines säurekatalysierten organisch-anorganischen Hybrid-Sol-Gels, Bereitstellen einer Polyanilinlösung, in welcher die Polyanilinkomponente bei Einarbeiten in die sich ergebende Beschichtung nicht mit der Beschichtung polymerisiert wird oder nicht chemisch an die Beschichtung gebunden wird, Vereinigen des Sol-Gels mit der Polyanilinlösung zur Dispergierung des Polyanilins in dem Sol-Gel, Beschichten des Substrats mit der Sol-Gel-Polyanilinlösung und Härten der Beschichtung an dem Substrat unter Bildung einer organisch-anorganischen Netzwerkbeschichtung, in welcher das Polyanilin derart dispergiert wird, dass der Großteil des und vorzugsweise das gesamte Polyanilin/s nicht mit dem organisch-anorganischen Netzwerk chemisch verbunden ist, und dass das Polyanilin innerhalb der Beschichtung unkoordiniert ist;
wobei die Sol-Gel-Beschichtung in mindestens zwei von der Zusammensetzung her unterschiedliche Bereiche geteilt ist, umfassend einen äußeren Bereich relativ zum Substrat und einen Zwischenbindungsbereich, der zwischen dem äußeren Bereich und dem Substrat angeordnet ist;
wobei das Polyanilin innerhalb des äußeren Bereichs und des Zwischenbereichs der Beschichtung dispergiert ist;
wobei der Zwischenbereich eine Zusammensetzung umfasst, die aus der Umsetzung der Sol-Gel-Beschichtung und des Substrats herrührt, relativ zu einer Zusammensetzung des äußeren Bereichs;
wobei die Sol-Gel-Beschichtung chemisch an das Substrat über den Zwischenbereich gebunden ist.

2. Metallsubstrat wie in Anspruch 1 beansprucht, wobei das Sol ein Siliciumdioxid- oder Titan-Sol ist.

3. Metallsubstrat wie in einem der vorangehenden Ansprüche beansprucht, wobei das Metall Folgendes umfasst:
Aluminium oder Aluminiumlegierung;
Magnesium oder Magnesiumlegierung;
Stahl;
Aluminium 2024;
rostfreien Stahl;
Zink oder Zinklegierung;
Titan oder Titanlegierung.

4. Metallsubstrat wie in einem der vorangehenden Ansprüche beansprucht, des Weiteren umfassend Siliciumdioxidnanopartikel, die innerhalb der Sol-Gel-Beschichtung dispergiert sind.

5. Substrat wie in einem der vorangehenden Ansprüche beansprucht, wobei die Dicke der Beschichtung zwischen 0,1 µm und 100 µm beträgt.

6. Metallsubstrat wie in einem der vorangehenden Ansprüche beansprucht, wobei der Zwischenbereich eine Dicke in dem Bereich von 5 bis 100 nm umfasst.

7. Metallsubstrat wie in einem der vorangehenden Ansprüche beansprucht, wobei der Zwischenbereich eine Dicke in dem Bereich von 1 bis 50 nm umfasst.

8. Substrat, umfassend:
eine Metallbasisschicht;
eine säurekatalysierte organisch-anorganische Hybridbeschichtung, die chemisch an das Substrat gebunden ist, erhältlich durch ein Sol-Gel-Verfahren der Erzeugung eines säurekatalysierten organisch-anorganischen Hybrid-Sol-Gels, Bereitstellen einer Polyanilinlösung, in welcher die Polyanilinkomponente bei Einarbeiten in die sich ergebende Beschichtung nicht mit der Beschichtung polymerisiert wird oder nicht chemisch an die Beschichtung gebunden wird, Vereinigen des Sol-Gels mit der Polyanilinlösung zur Dispergierung des Polyanilins in dem Sol-Gel, Beschichten des Substrats mit der Sol-Gel-Polyanilinlösung und Härten der Beschichtung an dem Substrat unter Bildung einer organisch-anorganischen Netzwerkbeschichtung, in welcher das Polyanilin derart dispergiert wird, dass der Großteil des und vorzugsweise das gesamte Polyanilin/s nicht mit dem organisch-anorganischen Netzwerk chemisch verbunden ist, und dass das Polyanilin innerhalb der Beschichtung unkoordiniert ist;
wobei die Sol-Gel-Beschichtung in mindestens zwei von der Zusammensetzung her unterschiedliche Bereiche geteilt ist, umfassend einen äußeren Bereich relativ zu der Metallschicht und einen Zwischenbindungsbereich, der zwischen dem äußeren Bereich und der Metallschicht angeordnet ist;
wobei das Polyanilin innerhalb des äußeren Bereichs und des Zwischenbereichs der Beschichtung dispergiert ist;
wobei der Zwischenbereich eine Zusammensetzung umfasst, die aus der Umsetzung der Sol-Gel-Beschichtung und der Metallschicht herrührt, relativ zu einer Zusammensetzung des äußeren Bereichs;
wobei die Sol-Gel-Beschichtung chemisch an die Metallschicht über den Zwischenbereich gebunden ist.

9. Verfahren zum Schützen eines Metallsubstrats vor Korrosion, umfassend:
Erzeugen eines säurekatalysierten organisch-anorganischen Hybrid-Sol-Gels;
Bereitstellen einer Polyanilinlösung, in welcher die Polyanilinkomponente bei Einarbeitung in die entstehende Beschichtung nicht mit der Beschichtung polymerisiert wird oder nicht an die Beschichtung chemisch gebunden wird;
Vereinigen des Sol-Gels mit der Polyanilinlösung unter Dispersion des Polyanilins in dem Sol-Gel;
Beschichten des Substrats mit der Sol-Gel-Polyanilinlösung; und
Härten der Beschichtung an dem Substrat, um so eine organisch-anorganische Netzwerkbeschichtung zu bilden, in welcher das Polyanilin derart dispergiert wird, dass der Großteil des und vorzugsweise das gesamte Polyanilin/s nicht mit dem organisch-anorganischen Netzwerk chemisch verbunden ist und dass das Polyanilin innerhalb der Beschichtung unkoordiniert ist;
wobei die entstehende Beschichtung in wenigstens zwei Bereiche geteilt ist, umfassend einen äußeren Bereich relativ zu der Beschichtung und einen Zwischenbindungsbereich, der zwischen dem äußeren Bereich und dem Substrat angeordnet ist;
wobei der Zwischenbereich eine Zusammensetzung umfasst, die von der Reaktion der Sol-Gel-Beschichtung mit dem Substrat umfasst, relativ zu einer Zusammensetzung des äußeren Bereichs; und
wobei das Polyanilin innerhalb sowohl des äußeren Bereichs als auch Zwischenbereichs dispergiert wird.

10. Verfahren gemäß Anspruch 9, wobei der pH des ursprünglichen Sol-Gels weniger als 6 beträgt.

11. Verfahren wie in einem der Ansprüche 9 bis 10 beansprucht, wobei das Volumenverhältnis des Polyanilinsols zum Sol-Gel in dem Bereich von 20:1 bis 1:1 liegt.

12. Verfahren wie in einem der Ansprüche 9 bis 11 beansprucht, des Weiteren umfassend Dotieren der Polyanilinlösung und/oder der Sol-Gel-Lösung mit Siliciumdioxidnanopartikeln vor dem Vereinigen des Sol-Gels und der Polyanilinlösung.

13. Verfahren wie in einem der Ansprüche 9 bis 12 beansprucht, des Weiteren umfassend Vorbehandeln des Substrats vor der Beschichtung mit dem Sol-Gel und der Polyanilinlösung durch ein beliebiges oder einer Kombination der Folgenden:
Auftragen einer oder mehrerer chemischer Verbindung(en) auf das Substrat;
Anwenden von mechanischem Schleifen auf das Substrat, um die Substratoberfläche aufzurauen.

14. Verfahren gemäß einem der Ansprüche 9 bis 13, wobei das Sol-Gel eines der Folgenden oder eine Kombination der Folgenden umfasst:
ein Siliciumdioxid-Sol;
ein Titan-Sol;
Zirkoniumdioxid-Sol.

15. Verfahren wie in einem der Ansprüche 9 bis 14 beansprucht, wobei der Schritt des Härtens der Beschichtung das Härten der Beschichtung bei Raumtemperatur umfasst.

## Revendications

1. Substrat métallique comprenant :
un revêtement hybride organique-inorganique catalysé à l'acide chimiquement lié au substrat pouvant être obtenu par un processus sol-gel consistant à générer un sol-gel hybride organique-inorganique catalysé à l'acide, à fournir une solution de polyaniline dans laquelle le composant de polyaniline, quand il est incorporé dans le revêtement obtenu, n'est pas polymérisé avec le revêtement ou n'est pas chimiquement lié au revêtement, à combiner le sol-gel avec la solution de polyaniline afin de disperser la polyaniline dans le sol-gel, à recouvrir le substrat avec la solution de polyaniline sol-gel et à faire durcir le revêtement au niveau du substrat de manière à former un revêtement de réseau organique-inorganique dans lequel la polyaniline est dispersée de telle sorte que la majorité et, de préférence, la totalité de la polyaniline n'est pas chimiquement liée au réseau organique-inorganique et que la polyaniline n'est pas coordonnée dans le revêtement ;
le revêtement de sol-gel divisé en au moins deux régions de composition différente incluant une région extérieure relative au substrat et une région de liaison intermédiaire positionnée entre la région extérieure et le substrat ;
la polyaniline dispersée dans la région extérieure et la région intermédiaire du revêtement ;
la région intermédiaire comprenant une composition résultant de la réaction du revêtement de sol-gel et du substrat par rapport à une composition de la région extérieure ;
le revêtement de sol-gel chimiquement lié au substrat par le biais de la région intermédiaire.

2. Substrat métallique selon la revendication 1 dans lequel le sol comprend un sol silice ou titane.

3. Substrat métallique selon une quelconque revendication précédente dans lequel le métal comprend :
de l'aluminium ou un alliage d'aluminium ;
du magnésium ou un alliage de magnésium ;
de l'acier ;
de l'aluminium 2024 ;
de l'acier inoxydable ;
du zinc ou un alliage de zinc ;
du titane ou un alliage de titane ;

4. Substrat métallique selon une quelconque revendication précédente comprenant en outre des nanoparticules de silice dispersées dans le revêtement de sol-gel.

5. Substrat selon une quelconque revendication précédente dans lequel l'épaisseur du revêtement est comprise entre 0,1 µm et 100 µm.

6. Substrat métallique selon une quelconque revendication précédente dans lequel la région intermédiaire comprend une épaisseur dans la plage de 5 à 100 nm.

7. Substrat métallique selon une quelconque revendication précédente dans lequel la région intermédiaire comprend une épaisseur dans la plage de 1 à 50 nm.

8. Substrat comprenant :
une couche de base métallique ;
un revêtement hybride organique-inorganique catalysé à l'acide lié à la couche métallique pouvant être obtenu par un processus sol-gel consistant à générer un sol-gel hybride organique-inorganique catalysé à l'acide, à fournir une solution de polyaniline dans laquelle le composant de polyaniline, quand il est incorporé dans le revêtement obtenu, n'est pas polymérisé avec le revêtement ou n'est pas chimiquement lié au revêtement, à combiner le sol-gel avec la solution de polyaniline afin de disperser la polyaniline dans le sol-gel, à recouvrir le substrat avec la solution de polyaniline sol-gel et à faire durcir le revêtement au niveau du substrat de manière à former un revêtement de réseau organique-inorganique dans lequel la polyaniline est dispersée de telle sorte que la majorité et, de préférence, la totalité de la polyaniline n'est pas chimiquement liée au réseau organique-inorganique et que la polyaniline n'est pas coordonnée dans le revêtement ;
le revêtement de sol-gel divisé en au moins deux régions de composition différente incluant une région extérieure relative à la couche métallique et une région de liaison intermédiaire positionnée entre la région extérieure et la couche métallique ;
la polyaniline dispersée dans la région extérieure et la région intermédiaire du revêtement ;
la région intermédiaire comprenant une composition résultant de la réaction du revêtement de sol-gel et de la couche métallique par rapport à une composition de la région extérieure ;
le revêtement de sol-gel chimiquement lié à la couche métallique par le biais de la région intermédiaire.

9. Procédé pour protéger un substrat métallique de la corrosion comprenant :
la génération d'un sol-gel hybride organique-inorganique catalysé à l'acide ;
la fourniture d'une solution de polyaniline dans laquelle le composant de polyaniline, quand il est incorporé dans le revêtement obtenu, n'est pas polymérisé avec le revêtement ou n'est pas chimiquement lié au revêtement ;
la combinaison du sol-gel avec la solution de polyaniline afin de disperser la polyaniline dans le sol-gel ;
le revêtement du substrat avec la solution de polyaniline sol-gel et
le durcissement du revêtement au niveau du substrat de manière à former un revêtement de réseau organique-inorganique dans lequel la polyaniline est dispersée de telle sorte que la majorité et, de préférence, la totalité de la polyaniline n'est pas chimiquement liée au réseau organique-inorganique et que la polyaniline n'est pas coordonnée dans le revêtement ;
dans lequel le revêtement obtenu est divisé en au moins deux régions incluant une région extérieure relative au revêtement et une région de liaison intermédiaire positionnée entre la région extérieure et le substrat ;
dans lequel la région intermédiaire comprend une composition résultant de la réaction du revêtement de sol-gel avec le substrat par rapport à une composition de la région extérieure ; et
dans lequel la polyaniline est dispersée à la fois dans la région extérieure et la région intermédiaire.

10. Procédé selon la revendication 9 dans lequel le pH du sol-gel initial est inférieur à 6.

11. Procédé selon l'une quelconque des revendications 9 à 10 dans lequel le rapport de volume du sol de polyaniline sur le sol-gel est compris dans la plage de 20:1 à 1:1.

12. Procédé selon l'une quelconque des revendications 9 à 11 comprenant en outre le dopage de la solution de polyaniline et/ou de la solution sol-gel avec des nanoparticules de silice avant la combinaison du sol-gel et de la solution de polyaniline.

13. Procédé selon l'une quelconque des revendications 9 à 12 comprenant en outre le prétraitement du substrat avant le revêtement avec le sol-gel et la solution de polyaniline par l'une quelconque ou une combinaison des actions suivantes :
l'application d'un ou de plusieurs composés chimiques au substrat ;
l'application d'une abrasion mécanique au substrat afin de rendre la surface de substrat rugueuse.

14. Procédé selon l'une quelconque des revendications 9 à 13 dans lequel le sol-gel comprend l'un quelconque ou une combinaison des éléments suivants :
un sol silice ;
un sol titane ;
un sol zircone.

15. Procédé selon l'une quelconque des revendications 9 à 14 dans lequel l'étape de durcissement du revêtement comprend le durcissement du revêtement à température ambiante.
